Europäisches Patentamt

European Patent Office

Office européen des brevets

(19)

(11) Veröffentlichungsnummer: **0 102 651**
**B1**

# (12) EUROPÄISCHE PATENTSCHRIFT

(45) Veröffentlichungstag der Patentschrift:
11.06.86

(51) Int. Cl.⁴: **B 23 K 3/02**

(21) Anmeldenummer: 83108894.3

(22) Anmeldetag: 08.09.83

(54) Einhand-Lötgerät.

(30) Priorität: 08.09.82 DE 8225325 U

(43) Veröffentlichungstag der Anmeldung:
14.03.84 Patentblatt 84/11

(45) Bekanntmachung des Hinweises auf die Patenterteilung:
11.06.86 Patentblatt 86/24

(84) Benannte Vertragsstaaten:
AT BE CH DE FR GB IT LI LU NL SE

(56) Entgegenhaltungen:
DE - A - 3 009 689
US - A - 2 303 947

(73) Patentinhaber: Cooper Industries Inc., P.O. Box 4446,
Houston Texas 77210 (US)

(72) Erfinder: Starker, Rudolf, Eichenweg 14,
D-7122 Besigheim (DE)

(74) Vertreter: Feldkamp, Rainer, Dipl.-Ing. et al,
Patentanwälte Dipl.-Ing. Curt Wallach Dipl.-Ing. Günther
Koch Dipl.-Ing . Rainer Feldkamp Dipl.-Phys.Dr. Tino
Haibach Kaufingerstrasse 8 Postfach 920,
D-8000 München 2 (DE)

## Beschreibung

Die Erfindung bezieht sich auf ein Einhand-Lötgerät mit einem Lötkolben mit einer elektrisch beheizten Lötspitze und einer Lötdraht-Zuführung, durch die hindurch Lötdraht zur Lötspitze zugeführt wird, wobei die Zuführung in einem rohrförmigen Mundstück endet, das relativ zur Lötspitze beweglich ist.

Bei einem bekannten Einhand-Lötgerät dieser Art (DE-AI-3009689) ist das rohrförmige Mundstück flexibel ausgebildet und an einem Arm befestigt, der eine Einstellung des freien Endes des Mundstückes in Längsrichtung des Lötkolbens ermöglicht, damit das freie Ende des Mundstückes immer in die Nähe des Endes der Lötspitze gebracht werden kann, selbst wenn Lötspitzen unterschiedlicher Länge verwendet werden. Die Zuführung des Lötzinns im Bereich der Lötspitze ist jedoch kritisch, da das aus dem Mundstück herausragende Ende des Lötzinns nicht zu nah an der heißen Lötspitze angeordnet sein darf, da andernfalls ein Auslaufen und Austropfen des Flußmittels aus dem Lötdraht möglich ist.

Der Erfindung liegt die Aufgabe zugrunde, ein Einhand-Lötgerät der eingangs genannten Art zu schaffen, bei dem die Zinnzufuhr an die heiße Lötspitze verbessert wird.

Diese Aufgabe wird erfindungsgemäß dadurch gelöst, daß die Zuführung als Rohr ausgebildet ist, daß an dem Mundstück eine Feder angreift, die das Mundstück in einer vorgegebenen Position hält, und daß das Mundstück so geformt ist, daß im nicht ausgelenkten Zustand der Feder das aus dem Mundstück herausragende Ende des Lötdrahtes in Abstand vom Lötbereich der Lötspitze gehalten ist.

Vorteilhafte Ausgestaltungen und Weiterbildungen der Erfindung ergeben sich aus den Unteransprüchen.

Durch die erfindungsgemäße Ausgestaltung des Einhand-Lötgerätes befindet sich das aus dem Zuführungsrohr bzw. dem Mundstück herausragende Ende des Lötgerätes im Ruhezustand immer in einem ausreichenden Abstand von der heißen Lötspitze, so daß keine Gefahr des Austropfens des Flußmittels besteht.

Bei dem Einhand-Lötgerät wird der Lötdraht mit Hilfe bekannter Einrichtungen unter der Steuerung beispielsweise eines Schalters am Lötkolben vorgeschoben und beim eigentlichen Lötvorgang wird der Lötkolben so geführt, daß das Lötzinn zwischen dem Werkstück und der heißen Lötspitze liegt. Durch die Wirkung der Feder liegt erst der Lötdraht am Werkstück auf und wird danach durch den niedergedrückten Kolben erhitzt, weil beim Niederdrücken des Kolbens das Mundstück aus seiner Ruhelage gegen die Wirkung der Feder ausgelenkt wird und ein Kontakt zwischen Lötdraht und der heißen Lötspitze entsteht.

Auf diese Weise befinden sich der Lötdraht, das Flußmittel und die Lötspitze gemeinsam an der Lötstelle und beim Abschmelzen des Lotes geht das freie Ende des Lötdrahtes automatisch durch die Wirkung der Feder in die Ruhestellung zurück.

Die Erfindung wird im folgenden anhand eines in der Zeichnung dargestellten Ausführungsbeispiels noch näher erläutert.

In der Zeichnung zeigen:

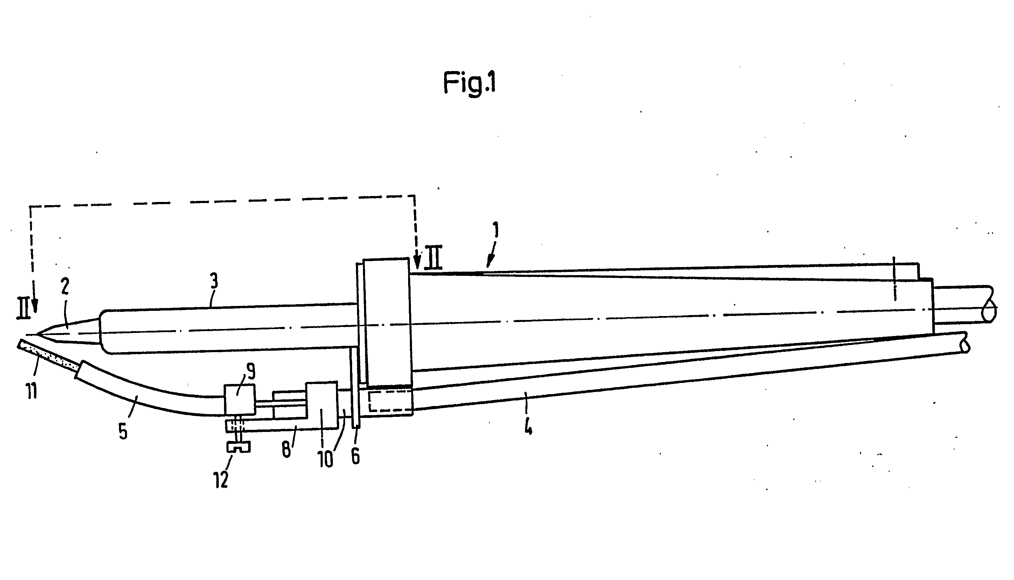

Figur 1 eine Seitenansicht einer Ausführungsform des Einhand-Lötgerätes,
Figur 2 eine vergrößerte Darstellung der Verbindung zwischen dem Zuführungsrohr und dem Mundstück in Richtung der Pfeile II - II nach Fig. 1, wobei ein Teil des Heizelementes sowie des Handgriffs weggebrochen dargestellt ist.

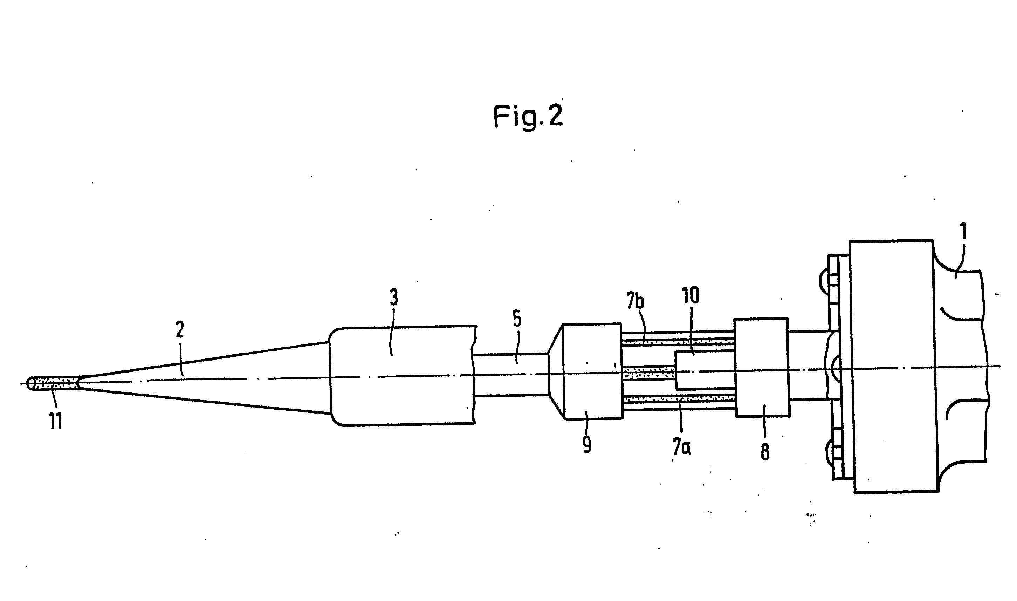

Die in der Zeichnung dargestellte Ausführungsform des Einhand-Lötgerätes besteht aus einem Lötkolben 1 mit einer Lötspitze 2, die am Ende eines Heizelementes 3 befestigt ist. Lötdraht wird mit Hilfe einer nicht gezeigten, an sich bekannten Lötzinn-Zuführungseinrichtung durch ein Zuführungsrohr 4 hindurch vorgeschoben, das benachbart zum Lötkolben 1 mit einem starren Endstück 10 verbunden ist, das über eine Befestigungslasche 6 am Lötkolben 1 befestigt ist. Auf das rohrförmige starre Endstück 10 des Zuführungsrohrs 4 ist ein Klemmstück 8 aufgeschoben, das in vorgegebener Lage auf dem Endstück 10 festlegbar ist. Das Klemmstück 8 trägt ein Ende der Feder 7, die gemäß Fig. 2 durch zwei langgestreckte Federdrahtabschnitte 7a, 7b auf beiden Seiten der Mittelachse des Klemmstücks 8 gebildet ist. Das andere Ende dieser Federdrahtabschnitte 7a, 7b ist in einem vergrößerten hinteren Endstück 9 eines Mundstücks 5 befestigt, das durch die Feder 7 gehaltert ist. Das Klemmstück 8 weist einen sich nach vorne erstreckenden Ansatz auf, der mit einer Gewindebohrung versehen dem hinteren Ende des Mundstücks 5 zusammenwirkt, um die Ausgangslage des freien Endes des Mundstücks 5 und damit die Lage des aus dem Mundstück herausragenden Abschnitts des Lötdrahtes 11 festzulegen.

Die Arbeitsweise des im Vorstehenden beschriebenen Einhand-Lötgerätes ist folgende: Der Lötdraht wird entsprechend der Einstellung des Gerätes, beispielsweise unter Betätigung durch einem am Lötkolben eingebauten Schalter vorgeschoben, so daß ein Ende des Lötdrahtes 11 aus dem Mundstück 5 herausragt und benachbart zur Lötspitze 2 liegt. Beim Lötvorgang wird der Lötkolben so geführt, daß der Lötdraht zunächst auf dem Werkstück aufliegt, worauf der Lötkolben niedergedrückt wird, um eine Berührung des Lötdrahtes mit der Lötspitze 2 zu erreichen. Hierbei verschränkt sich das Mundstück 5 gegen die Wirkung der Feder 7 in Richtung auf die Lötspitze bzw. das Heizelement des Lötkolbens.

Beim Abschmelzen des Lotes unter der Wirkung der heißen Lötspitze wird das Mundstück 5 wieder freigegeben und durch die Feder 7 in Abstand von der Lötspitze bewegt, so daß das Austropfen des Flußmittels aus dem Lötdraht weitgehend verhindert wird, da das freie Ende des Lötdrahtes in einen Bereich bewegt wird, der keine allzu hohe Temperatur mehr aufweist.

**Patentsprüche**

1. Einhand-Lötgerät mit einem Lötkolben (1) mit einer elektrisch beheizten Lötspitze (2) und einer Lötdraht-Zuführung (4), durch die hindurch Lötdraht (11) zur Lötspitze (2) zugeführt wird, wobei die Zuführung in einem rohrförmigen Mundstück (5) endet, das relativ zur Lötspitze (2) beweglich ist, dadurch gekennzeichnet, daß die Zuführung als Rohr (4) ausgebildet ist, daß an dem Mundstück (5) eine Feder (7) angreift, die das Mundstück (5) in einer vorgegebenen Position hält, und daß das Mundstück (5) so geformt ist, daß im nicht ausgelenkten Zustand der Feder (7) das aus dem Mundstück (5) herausragende Ende des Lötdrahtes (11) in Abstand vom Lötbereich der Lötspitze (2) gehalten ist.

2. Lötgerät nach Anspruch 1, dadurch gekennzeichnet, daß das am Lötkolben (1) angeordnete Ende (10) des Zuführungsrohrs mit dem Lötkolben (1) starr verbunden ist und daß die Feder (7) zwischen diesem Ende (10) des Zuführungsrohrs (4) und dem hinteren Ende des Mundstücks (5) angeordnet ist.

3. Lötgerät nach Anspruch 1 oder 2, dadurch gekennzeichnet, daß das Zuführungsrohr (4) aus einem biegsamen Kunststoffschlauch besteht, der am Lötkolben (1) mit einem starren Endstück (10) verbunden ist, das über eine Befestigungslasche (6) am Lötkolben (1) befestigt ist, daß auf das rohrförmige Endstück (10) des Zuführungsrohrs (4) eine Klemmstück (8) aufgeschoben ist, das in vorgegebener Lage auf dem Endstück (10) festlegbar ist, und daß ein Ende der Feder (7) an dem Klemmstück (8) befestigt ist, während das andere Ende der Feder (7) mit dem Mundstück (5) verbunden ist.

4. Lötgerät nach Anspruch 3, dadurch gekennzeichnet, daß das Klemmstück (8) einen sich in Richtung auf das Mundstück (5) erstreckenden Ansatz (8) aufweist, an dessen freien Ende eine Stellschraube (12) zur Einstellung der Ausgangslage des Mundstücks (5) angeordnet ist, deren Spitze am hinteren Ende des Mundstücks (5) angreift.

5. Lötgerät nach einem der vorhergehenden Ansprüche, dadurch gekennzeichnet, daß die Feder (7) durch langgestreckte Federdrahtabschnitte gebildet ist.

**Claims**

1. One-hand soldering device comprising a soldering bit (1) having an electrically heated soldering tip (2) and a soldering wire supply means (4) through which soldering wire (11) is supplied to the soldering tip (2), the supply means terminating in a tubular mouthpiece (5) which is movable relatively to the soldering tip (2), characterized in that the supply means is constructed as tube (4), that at the mouthpiece (5) a spring (7) engages which holds the mouthpiece (5) in a predetermined position and that the mouthpiece (5) is so formed that in the undeflected state of the spring (7) the end of the soldering wire (11) projecting from the mouthpiece (5) is held spaced from the soldering region of the soldering tip (2).

2. Soldering device according to claim 1, characterized in that the end (10) of the supply tube disposed at the soldering bit (1) is rigidly connected to the latter and that the spring (7) is disposed between said end (10) of the supply tube (4) and the rear end of the mouthpiece (5).

3. Soldering device according to claim 1 or 2, characterized in that the supply tube (4) consists of a flexible plastic tube which is connected to the soldering bit (1) with a rigid end piece (10) which is secured via a securing bracket (6) to the soldering bit (1), that onto the tubular end pice (10) of the supply tube (4) a clamping member (8) is pushed which can be locked in predetermined position on the end piece (10) and that one end of the spring (7) is secured to the clamping member (8) whilst the other end of the spring (7) is connected to the mouthpiece (5).

4. Soldering device according to claim 3, characterized in that the clamping member (8) comprises an extension (8) which extends in the direction towards the mouthpiece (5) and at the free end of which an adjusting screw (12) for setting the initial position of the mouthpiece (5) is arranged, the tip of which engages the rear end of the mouthpiece (5).

5. Soldering device according to any one of the preceding claims, characterized in that the spring (7) is formed by elongated spring wire portions.

**Revendications**

1. Appareil à souder à une main, comprenant un fer à souder (1) avec une panne (2) chauffée électriquement et un dispositif d'amenée de fil d'apport (4) à travers lequel est amené le fil d'apport (11) vers la panne (2), le dispositif d'amenée se terminant par un ajutage tubulaire (5) qui est mobile par rapport à la panne, caractérisé en ce que le dispositif d'amenée est constitué sous forme d'un tube (4), qu'avec l'ajutage (5) coopère un ressort (7) qui maintient l'ajutage (5) dans une position prédéterminée, et que l'ajutage (5) est conformé de manière que dans l'état non dévié du ressort (7) l'extrémité du fil d'apport (11) qui fait saillie de l'ajutage (5) soit maintenue à distance de la région de soudage de la panne (2).

2. Appareil à souder selon la revendication 1, caractérisé en ce que l'extrémité (10) du tube d'amenée montée sur le fer à souder (1) est reliée rigidement au fer à souder (1) et que le ressort (7) est disposé entre cette extrémité (10) du tube d'amenée (4) et l'extrémité arrière de l'ajutage (5).

3. Appareil à souder selon la revendication 1 ou 2, caractérisé en ce que le tube d'amenée (4) est constitué par une gaine en matière plastique flexible, reliée au fer à souder (1) par une pièce d'extrémité rigide (10) qui est fixée au fer à souder (1) par l'intermédiaire d'une patte de fixation (6), que sur la pièce d'extrémité (10) tubulaire du tube d'amenée (4) est enfoncée une pièce de blocage (8) qui peut être fixée dans une position prédéterminée sur la pièce d'extrémité (10), et qu'une extrémité du ressort (7) est fixée à la pièce de blocage (8) alors que l'autre extrémité du ressort (7) est reliée à l'ajutage (5).

4. Appareil à souder selon la revendication 3, caractérisé en ce que la pièce de blocage (8) présente un appendice (8) s'étendant en direction de l'ajutage (5), à l'extrémité libre duquel est montée une vis de réglage (12) pour régler la position de départ de l'ajutage (5), et dont la pointe coopère avec l'extrémité arrière de l'ajutage (5).

5. Appareil à souder selon l'une quelconque des revendications précédentes, caractérisé en ce que le ressort (7) est constitué par des tronçons de fil d'acier à ressort de forme allongée.

Fig.1

0 102 651

Fig.2